# FASCICULE DE BREVET EUROPEEN

(11) **EP 4 123 190 B1**
(45) Date de publication et mention de la délivrance du brevet: **01.01.2025**
(21) Numéro de dépôt: 22186556.1
(22) Date de dépôt: 22.07.2022
(51) Int. Cl.: F16C 11/02, F16C 17/02, F16C 17/24, F16C 19/04, F16C 19/24, F16C 19/44, F16C 19/52, F16C 33/10, F16C 37/00

(54) **RÉDUCTEUR MÉCANIQUE POUR TURBOMACHINE À GAZ D'AXE LONGITUDINAL**
MECHANISCHES UNTERSETZUNGSGETRIEBE FÜR GASTURBOMASCHINEN MIT LÄNGSACHSE
MECHANICAL GEARBOX FOR A LONGITUDINAL AXIS GAS TURBINE ENGINE

(30) Priorité: 24.07.2021 FR 2108047
(43) Date de publication de la demande: 25.01.2023
(73) Titulaire: Safran Transmission Systems, 92700 Colombes (FR)
(72) Inventeur: PAP, Balint, 77550 MOISSY-CRAMAYEL (FR); PELTIER, Jordane, Emile, André, 77550 MOISSY-CRAMAYEL (FR); PENNACINO, Antoine, Jacques, Marie, 77550 MOISSY-CRAMAYEL (FR)
(74) Mandataire: Ernest Gutmann - Yves Plasseraud S.A.S.

(56) Documents cités:
- EP-A1- 1 348 879
- EP-A2- 1 806 491
- FR-A1- 2 977 636
- FR-A1- 3 047 284
- FR-A1- 3 100 050
- JP-A- 2008 281 191

## Description

### DOMAINE

La présente invention concerne un pivot pour palier et plus particulièrement un pivot destiné à être intégré dans un réducteur d'une turbomachine telle qu'un turboréacteur ou un turbopropulseur.

### CONTEXTE

Le rôle d'un réducteur mécanique est de modifier le rapport de vitesse et de couple entre l'axe d'entrée et l'axe de sortie d'un mécanisme.

Les nouvelles générations de turbomachines à double flux, notamment celles ayant un haut taux de dilution, comportent un réducteur mécanique pour entraîner l'arbre d'une soufflante (aussi appelé « fan »). De manière usuelle, le réducteur a pour but de transformer la vitesse de rotation dite rapide de l'arbre d'une turbine de puissance en une vitesse de rotation plus lente pour l'arbre entraînant la soufflante.

Un tel réducteur comprend un pignon central, appelé solaire, une couronne et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec l'axe longitudinal X de la turbomachine. Les satellites ont chacun un axe de révolution Y différent, ils sont équirépartis sur un cercle autour de l'axe des planétaires. Ces axes Y sont parallèles à l'axe longitudinal X.

Il existe plusieurs architectures de réducteur. Dans l'état de l'art des turbomachines à double flux, les réducteurs sont de type planétaire ou épicycloïdal. Un tel réducteur est par exemple connu du document FR 3 047 284 A1. existe dans d'autres applications similaires, des architectures dites différentielles ou « compound ».
- Sur un réducteur planétaire, le porte-satellites est fixe et la couronne constitue l'arbre de sortie du dispositif qui tourne dans le sens inverse du solaire.
- Sur un réducteur épicycloïdal, la couronne est fixe et le porte-satellites constitue l'arbre de sortie du dispositif qui tourne dans le même sens que le solaire.
- Sur un réducteur différentiel, aucun élément n'est fixé en rotation. La couronne tourne dans le sens contraire du solaire et du porte-satellites.

Les réducteurs peuvent comprendre un ou plusieurs étages d'engrènement. Cet engrènement est assuré de différentes façons comme par contact, par friction ou encore par champs magnétiques. Il existe plusieurs types d'engrènement par contact comme avec des dentures droites ou en chevron.

Chaque satellite porté par le porte-satellite est monté libre en rotation sur un pivot. L'utilisation d'un pivot formant avec un pignon satellite un palier lisse permet de réduire l'encombrement et la masse et offre une durée de vie quasiment infinie, sous la réserve qu'ils soient constamment alimentés en huile de lubrification et de refroidissement. On note également qu'un pivot peut être utilisé avec un palier à roulement dont une bague interne serait portée par le pivot, la bague externe étant alors solidaire en rotation d'un satellite.

On sait que la température des pivots pilote la capacité de portance du palier qu'il soit de type hydrodynamique ou à roulements. Plus la température augmente, plus la portance c'est-à-dire la capacité de charge, du pivot diminue. On comprend donc que la maîtrise de la température du pivot est de première importance pour pouvoir garantir une portance efficace.

### RESUME DE L'INVENTION

Il est ainsi proposé un réducteur mécanique pour turbomachine à gaz d'axe longitudinal, comprenant une couronne et des satellites en prise avec un solaire et avec la couronne et montés chacun libre en rotation autour de leur axe sur un porte-satellites, les satellites étant configurés pour chacun tourner autour de leur axe par l'intermédiaire d'un pivot pour un palier, le pivot comprenant une première pièce annulaire comportant un passage axial de lubrification et une seconde pièce annulaire montée autour de la première pièce annulaire, la première pièce annulaire délimitant avec la seconde pièce annulaire un circuit de lubrification dont au moins une entrée d'huile débouche à l'intérieur de la première pièce annulaire dans le passage axial et au moins une sortie d'huile débouche radialement à l'extérieur de la seconde pièce annulaire.

A la différence de la technique antérieure, le pivot est réalisé en deux pièces distinctes et un circuit d'huile est réalisé dans le pivot de manière à refroidir le pivot. Ainsi, pour une charge donnée dans des conditions de fonctionnement données, l'abaissement de la température du pivot, permet de réduire la dimension du pivot, autorisant ainsi un gain de masse. Lorsque le pivot est utilisé dans un réducteur mécanique, on comprend que la réduction de la masse de plusieurs pivots d'avère d'autant plus avantageuse.

Selon une autre caractéristique, la première pièce annulaire comprend une paroi annulaire dans laquelle sont formées une pluralité de gorges annulaires autour desquelles la seconde pièce annulaire est montée à étanchéité. Les gorges annulaires sont ouvertes radialement vers l'extérieur et les débouchés radialement externe des gorges annulaires sont obturées par la seconde pièce annulaire.

Selon une autre caractéristique, le circuit d'huile de lubrification comprend une pluralité de gorges annulaires formées dans une paroi annulaire, la seconde pièce annulaire étant montée autour des gorges annulaires et montées à étanchéité autour de celles-ci.

La première pièce annulaire et la seconde pièce annulaire peuvent être réalisées par fonderie ou bien par fabrication additive. L'assemblage permet de simplifier la conception de la première pièce annulaire et de la seconde pièce annulaire.

Les gorges annulaires peuvent être en communication fluidique les unes avec les autres.

L'entrée d'huile du circuit d'huile de lubrification débouche dans une gorge annulaire positionnée longitudinalement à la moitié de la longueur du pivot.

Le pivot peut comprendre 2k+1 gorges annulaires, k étant un nombre entier positif, de préférence supérieur ou égal à 3. Dans une réalisation particulière, le nombre de gorges annulaires peut être égal à 5.

Les gorges annulaires communiquent fluidiquement au moyen d'ouvertures, telles que des fentes, formées dans des cloisons annulaires de séparation des gorges annulaires. Des orifices peuvent être formées dans les cloisons annulaires.

Chaque gorge comprend une paroi radiale joignant deux cloisons consécutives de manière à empêcher la circulation d'huile sur 360°, chaque paroi radiale séparant circonférentiellement une première extrémité circonférentielle de la gorge annulaire et une seconde extrémité circonférentielle de la gorge annulaire, chaque gorge annulaire comprenant une entrée d'huile au niveau de sa première extrémité circonférentielle et une sortie d'huile au niveau de sa seconde extrémité circonférentielle.

L'huile circule ainsi circonférentiellement de la première extrémité circonférentielle d'une gorge annulaire à la seconde extrémité circonférentielle de ladite gorge annulaire de manière à permettre une circulation d'huile sur sensiblement 360° et ainsi refroidir annulairement au mieux le pivot.

Les deux gorges annulaires d'extrémités longitudinales peuvent comprendre chacune une sortie d'huile reliée à un canal dont une extrémité aval débouche radialement à l'extérieur de la seconde pièce annulaire.

L'invention concerne également une turbomachine à gaz pour aéronef comprenant un tel réducteur mécanique dont le solaire entoure et est solidaire en rotation d'un arbre du compresseur de la turbomachine.

La turbomachine peut également être telle que la couronne est solidaire d'un carter ou virole annulaire statique du compresseur basse pression.

Le pivot selon le présent document peut être utilisé dans un palier lisse hydrodynamique ou bien dans un palier à roulements, par exemple à billes ou à rouleaux.

L'invention sera mieux comprise et d'autres détails, caractéristiques et avantages de l'invention apparaîtront à la lecture de la description suivante faite à titre d'exemple non limitatif en référence aux dessins annexés.

### BREVE DESCRIPTION DES FIGURES

- [Fig.1] la figure 1 est une vue schématique en coupe axiale d'une turbomachine utilisant l'invention,
- [Fig.2] la figure 2 est une vue partielle en coupe axiale d'un réducteur mécanique ;
- [Fig.3] la figure 3 est une vue schématique d'un pivot selon la présente invention et selon un plan de coupe comprenant l'axe longitudinal Y du pivot ;
- [Fig.4] la figure 4 est une vue schématique en perspective de la première annulaire pièce du pivot selon la présente invention ;
- [Fig.5] la figure 5 est une autre vue schématique en perspective de la première pièce annulaire du pivot selon la présente invention ;
- [Fig.6] la figure 6 est une vue schématique d'un pivot selon la présente invention, selon un plan de coupe sensiblement perpendiculaire à l'axe Y longitudinal du pivot ;
- [Fig.7] la figure 7 est une vue schématique d'une extrémité longitudinale du pivot selon l'invention ;
- [Fig.8] la figure 8 est une vue schématique d'une extrémité longitudinale de la première pièce du pivot.

### DESCRIPTION DETAILLEE

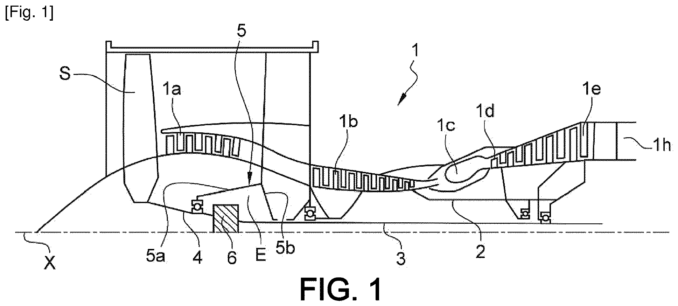

La figure 1 décrit une turbomachine 1 qui comporte, de manière classique, une soufflante S, un compresseur basse pression 1a, un compresseur haute pression 1b, une chambre annulaire de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

La soufflante S est entraînée par un arbre de soufflante 4 qui est entrainé à l'arbre BP 3 au moyen d'un réducteur 6. Ce réducteur 6 est généralement de type planétaire ou épicycloïdal.

La description qui suit concerne un réducteur du type épicycloïdal, dont le porte-satellites et le solaire sont mobiles en rotation, la couronne du réducteur étant fixe dans le repère du moteur. Cela étant la description s'applique également à un réducteur d'un autre type, tel qu'un réducteur planétaire ou différentiel.

Le réducteur 6 est positionné dans la partie amont de la turbomachine. Dans la présente demande, les expressions amont et aval font référence à la direction de l'écoulement général des gaz dans la turbomachine, le long de son axe d'allongement ou de rotation de ses rotors. Une structure fixe comportant schématiquement, ici, une partie amont 5a et une partie aval 5b qui compose le carter moteur ou stator 5 est agencée de manière à former une enceinte E entourant le réducteur 6. Cette enceinte E est ici fermée en amont par des joints au niveau d'un palier permettant la traversée de l'arbre de soufflante 4, et en aval par des joints au niveau de la traversée de l'arbre BP 3.

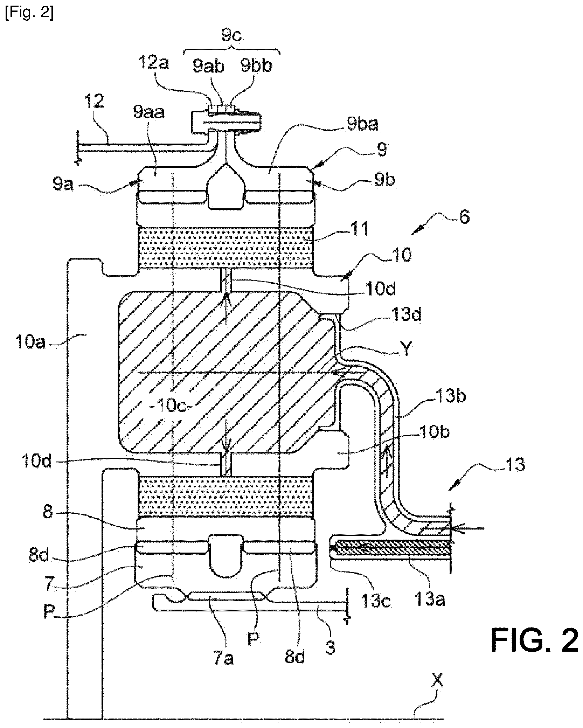

La figure 2 montre un réducteur épicycloïdal 6. En entrée, le réducteur 6 est relié à l'arbre BP 3, par exemple par l'intermédiaire de cannelures internes 7a. Ainsi, l'arbre BP 3 entraîne un pignon planétaire appelé le solaire 7. Classiquement, le solaire 7, dont l'axe de rotation est confondu avec celui de la turbomachine X, entraîne une série de pignons appelés satellites 8, qui sont équirépartis sur le même diamètre autour de l'axe de rotation X. Ce diamètre est égal au double de l'entraxe de fonctionnement entre le solaire 7 et les satellites 8. Le nombre de satellites 8 est généralement défini entre trois et sept pour ce type d'application.

L'ensemble des satellites 8 est maintenus par un châssis appelé porte-satellites 10. Chaque satellite 8 tourne autour de son propre axe Y, et engrène avec la couronne 9.

En sortie nous avons:
- Dans cette configuration épicycloïdale, l'ensemble des satellites 8 entraine en rotation le porte-satellite 10 autour de l'axe X de la turbomachine. La couronne est fixée au carter moteur ou stator 5 via un porte-couronne 12 et le porte-satellites 10 est fixé à l'arbre de soufflante 4.
- Dans une autre configuration planétaire, l'ensemble des satellites 8 est maintenu par un porte-satellites 10 qui est fixé au carter moteur ou stator 5. Chaque satellite entraine la couronne qui est rapportée à l'arbre de soufflante 4 via un porte-couronne 12.

Chaque satellite 8 est monté libre en rotation à l'aide d'un palier 11, par exemple de type roulement ou palier hydrodynamique. Chaque palier 11 est prévu sur un des supports tubulaires 10b du porte-satellites 10 et tous les supports sont positionnés les uns par rapport aux autres à l'aide d'un ou plusieurs châssis structurels 10a du porte-satellites 10. Le palier peut être formé par un pivot autour duquel est monté un satellite formant ainsi un palier hydrodynamique. Le palier peut être du type à roulements et comprendre une bague interne formée ou solidaire du pivot et une bague externe solidaire du satellite. Il existe un nombre de supports tubulaires 10b et de paliers 11 égal au nombre de satellites. Pour des raisons de fonctionnement, de montage, de fabrication, de contrôle, de réparation ou de rechange, les supports 10b et le châssis 10a peuvent être séparés en plusieurs pièces.

Pour les mêmes raisons citées précédemment, la denture d'un réducteur peut être séparée en plusieurs hélices présentant chacun un plan médian P. Dans notre exemple, nous détaillons le fonctionnement d'un réducteur à plusieurs hélices avec une couronne séparée en deux demi-couronnes:

Une demi-couronne amont 9a constituée d'une jante 9aa et d'une demi-bride de fixation 9ab. Sur la jante 9aa se trouve l'hélice amont de la denture du réducteur. Cette hélice amont engrène avec celle du satellite 8 qui engrène avec celle du solaire 7.

Une demi-couronne aval 9b constituée d'une jante 9ba et d'une demi-bride de fixation 9bb. Sur la jante 9ba se trouve l'hélice aval de la denture du réducteur. Cette hélice aval engrène avec celle du satellite 8 qui engrène avec celle du solaire 7.

Si les largeurs d'hélice varient entre le solaire 7, les satellites 8 et la couronne 9 à cause des recouvrements de denture, elles sont toutes centrées sur un plan médian P pour les hélices amont et sur un autre plan médian P pour les hélices aval. Dans le cas d'un roulement à deux rangées de rouleaux, chaque rangée d'éléments roulants est aussi de préférence, mais pas nécessairement centrée sur deux plans médians.

La demi-bride de fixation 9ab de la couronne amont 9a et la demi-bride de fixation 9bb de la couronne aval 9b forment la bride de fixation 9c de la couronne. La couronne 9 est fixée à un porte-couronne en assemblant la bride de fixation 9c de la couronne et la bride de fixation 12a du porte-couronne à l'aide d'un montage boulonné par exemple.

Les flèches de la figure 2 décrivent l'acheminement de l'huile dans le réducteur 6. L'huile arrive dans le réducteur 6 depuis la partie stator 5 dans un distributeur 13 par différents moyens qui ne seront pas précisés dans cette vue car ils sont spécifiques à un ou plusieurs types d'architecture. Le distributeur 13 comprend des injecteurs 13a et des bras 13b. Les injecteurs 13a ont pour fonction de lubrifier les dentures et les bras 13b ont pour fonction de lubrifier les paliers. L'huile est amenée vers l'injecteur 13a pour ressortir par l'extrémité 13c afin de lubrifier les dentures. L'huile est également amenée vers le bras 13b et circule via la bouche d'alimentation 13d du palier 11. L'huile circule ensuite à travers le support 10b dans une ou des cavités 10c pour ensuite ressortir par des canalisations 10d afin de lubrifier les paliers des satellites.

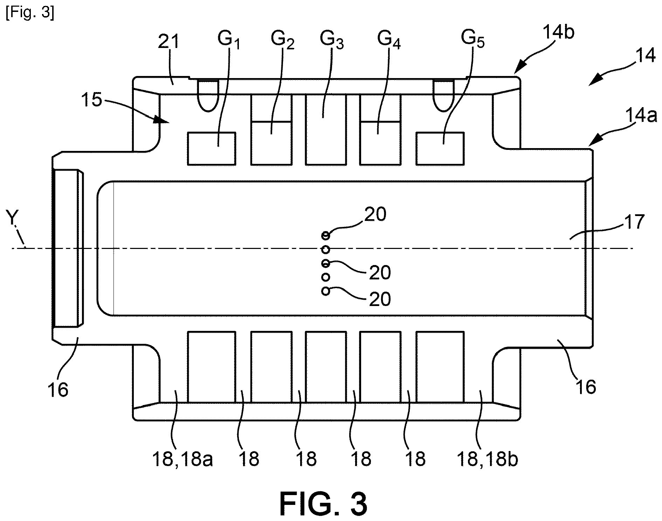

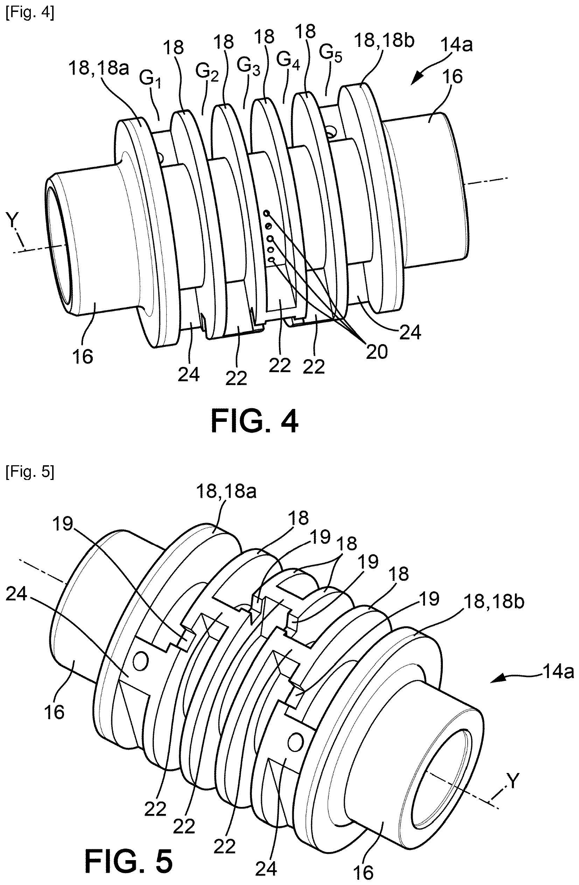

Le palier comprend ainsi un pivot 14 tel que représenté aux figures 3 et suivantes. Plus particulièrement, la figure 3 représente le pivot 14 dans son intégralité comprenant une première pièce annulaire 14a et une seconde pièce annulaire 14b. La figure 4 représente la première pièce annulaire 14a de manière isolée.

Selon l'invention, la seconde pièce annulaire 14b entoure extérieurement la première pièce annulaire 14a. La première pièce annulaire 14a comprend une paroi annulaire 15 reliée à ses extrémités à deux portions tubulaires 16. La paroi annulaire 15 et les portions tubulaires 16 délimitent ensemble intérieurement un passage axial 17. Ce passage est tubulaire et est coaxial à l'axe Y du pivot. La première pièce annulaire 14a comprend une pluralité de gorges annulaires G1, G2, G3, G4, G5 le long de l'axe Y longitudinal du pivot 14. Les gorges annulaires G1, G2, G3, G4, G5 sont délimitées latéralement par des cloisons annulaires radiales 18. Les cloisons annulaires radiales 18, à l'exception des cloisons d'extrémités longitudinales 18a, 18b, comprennent des ouvertures 19, telles que des fentes, permettant le passage d'huile d'une gorge annulaire à l'autre.

La première pièce annulaire 14a comprend un nombre impair de gorges, c'est-à-dire 2k+1 gorges annulaires, avec k un nombre entier positif. Elle pourrait encore comprendre un nombre pair de gorges annulaire. Dans le cas illustré aux figures, la première pièce annulaire comprend 5 gorges annulaires, à savoir une première gorge annulaire G1 d'extrémité longitudinale, une seconde gorge annulaire G2, une troisième gorge annulaire G3, une quatrième gorge annulaire G4 et une cinquième gorge annulaire G5 d'extrémité longitudinale.

La seconde pièce annulaire 14b comprend une paroi cylindrique 21 montée à étanchéité (assemblage étanche) autour de la première pièce annulaire 14a de manière à ce qu'une surface cylindrique radialement interne de cette paroi cylindrique 21 viennent obturer les gorges annulaires G1, G2, G3, G4, G5 en réalisant un appui sur les extrémités radialement externes des cloisons annulaires radiales 18. Les gorges annulaires G1, G2, G3, G4, G5 sont en communication fluidique les unes avec les autres de manière à former un circuit d'huile entre la première pièce annulaire 14a et la seconde pièce annulaire 14b.

Comme on peut le voir sur la figure 4, la première pièce annulaire 14a comprend au moins une entrée d'huile 20 de refroidissement du pivot 14. En l'espèce, elle comprend une pluralité d'orifices 20 d'entrée d'huile sensiblement alignés circonférentiellement, ces orifices 20 débouchant radialement vers l'intérieur dans le passage axial et pouvant être reliés fluidiquement aux canaux 10d précédemment décrits. Ces orifices d'entrée d'huile débouchent dans la troisième gorge annulaire G3.

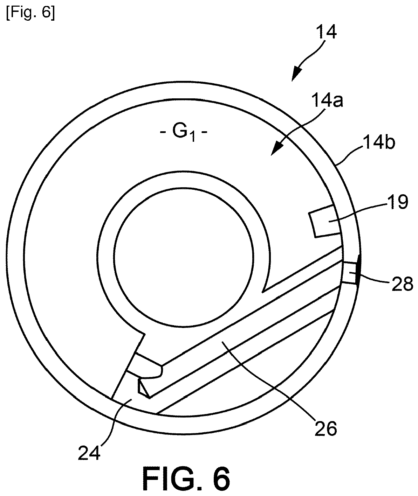

Chaque gorge annulaire G1, G2, G3, G4, G5, comprend une paroi radiale 22 ou un élément de paroi 24 joignant deux cloisons consécutives de manière à empêcher la circulation d'huile sur 360°, chaque paroi radiale 22 ou élément de paroi 24 séparant circonférentiellement une première extrémité circonférentielle de la gorge annulaire et une seconde extrémité circonférentielle de la gorge annulaire (figures 4 et 5). On observe que dans le cas des deuxième G2, troisième G3 et quatrième G4 gorges annulaires, la paroi radiale s'étendant longitudinalement et que dans le cas des gorges première G1 et cinquième G5 gorges annulaires, l'élément de paroi 24 s'étend sur une distance angulaire plus importante et loge un canal 26 d'écoulement d'huile dont l'extrémité amont est reliée à la seconde extrémité circonférentielle de la première gorge annulaire G1 et de la cinquième gorge annulaire G5 et dont l'extrémité aval est reliée à une sortie d'huile 28 formée dans la paroi cylindrique 21 de la seconde pièce annulaire 14b (figure 6).

Chaque gorge annulaire G1, G2, G3, G4, G5 comprend une entrée d'huile au niveau de sa première extrémité circonférentielle et une sortie d'huile au niveau de sa seconde extrémité circonférentielle. Plus particulièrement, l'entrée d'huile dans la troisième gorge annulaire G3 est formée par les orifices 20 formées au niveau de la première extrémité circonférentielle de la troisième gorge annulaire G3. Cette troisième gorge annulaire G3 comprend deux sorties d'huile agencées au niveau de sa seconde extrémité circonférentielle, une première étant formée par une ouverture 19 pour alimenter en huile la première extrémité circonférentielle de la seconde gorge annulaire G2 et par une ouverture 19 pour alimenter en huile la première extrémité circonférentielle de la quatrième gorge annulaire G4. L'huile s'écoule ensuite sur 360° jusqu'à la seconde extrémité de la deuxième gorge annulaire G2 et jusqu'à la seconde extrémité circonférentielle de la quatrième gorge annulaire G4. Elle pénètre ensuite dans la première gorge annulaire G1 au niveau de sa première extrémité circonférentielle par une ouverture 19 et dans la cinquième gorge annulaire G5 au niveau de sa première extrémité circonférentielle par une ouverture 19. Elle s'écoule ensuite dans les première G1 et cinquième G5 gorges annulaires, puis dans les canaux respectifs 26 jusqu'aux orifices 28 de sortie d'huile de la seconde pièce annulaire 14b.

La réalisation d'un circuit d'huile dans le pivot 14 permet d'abaisser sa température en fonctionnement ce qui autorise une réduction de ses dimensions tout en permettant une résistance à la charge inchangée. Ainsi, la masse du pivot est réduite de même que celle du réducteur mécanique. Dans le cas d'une configuration épicycloïdal, la diminution de la masse diminue les charges radiales du porte-satellites lequel pourrait également avoir une masse qui serait réduite.

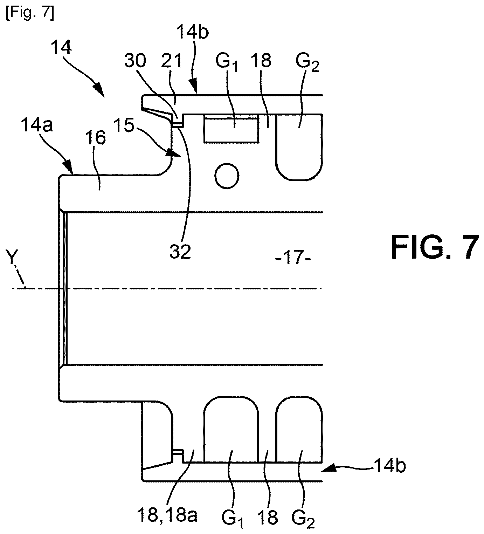

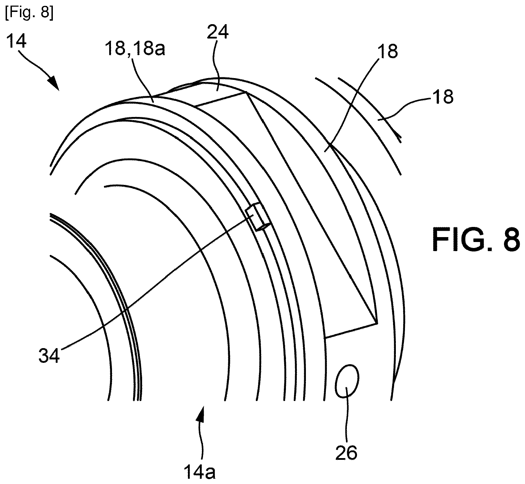

La figure 7 illustre une liaison mécanique possible entre la première pièce annulaire 14a et la seconde pièce annulaire 14b pour permettre un blocage axial des deux pièces annulaires ensemble. Ce blocage axial peut être réalisé par la présence d'un rebord annulaire 30 s'étendant radialement vers l'intérieur depuis la paroi cylindrique 21 de la seconde pièce annulaire et qui est engagé dans une rainure annulaire 32 de la première pièce annulaire 14a. D'autres moyens de blocage peuvent être envisagés tels qu'un vissage ou un soudage. Un blocage en rotation des première pièce annulaire 14a et seconde pièce annulaire14b peut être prévu et réalisé par exemple par la formation d'une encoche 34 sur une cloison annulaire radiale 18, cette encoche 24 coopérant avec un organe de la seconde pièce annulaire 14b (figure 8).

## Revendications

1. Réducteur mécanique pour turbomachine à gaz d'axe longitudinal, comprenant une couronne et des satellites (8) en prise avec un solaire (7) et avec la couronne (9) et montés chacun libre en rotation autour de leur axe (Y) sur un porte-satellites (10), les satellites (8) étant configurés pour chacun tourner autour de leur axe (Y) par l'intermédiaire d'un pivot (14) lequel comprend une première pièce annulaire (14a) comportant un passage axial (17) de lubrification et une seconde pièce annulaire (14b) montée autour de la première pièce annulaire (14a), la première pièce annulaire (14a) délimitant avec la seconde pièce annulaire (14b) un circuit de lubrification dont au moins une entrée d'huile (20) débouche à l'intérieur de la première pièce annulaire (14a) dans le passage axial (17) et au moins une sortie d'huile (28) débouche radialement à l'extérieur de la seconde pièce annulaire (14b),
dans lequel la première pièce annulaire (14a) comprend une paroi annulaire (15) dans laquelle sont formées une pluralité de gorges annulaires (G1, G2, G3, G4, G5) autour desquelles la seconde pièce annulaire (14b) est montée à étanchéité,
les gorges annulaires (G1, G2, G3, G4, G5) communiquant fluidiquement au moyen d'ouvertures (19), telles que des fentes, formées dans des cloisons annulaires (18) de séparation des gorges annulaires (G1, G2, G3, G4, G5),
chaque gorge annulaire (G1, G2, G3, G4, G5) comprenant une paroi radiale (22, 24) joignant deux cloisons consécutives (18) de manière à empêcher la circulation d'huile sur 360°, chaque paroi radiale (22, 24) séparant circonférentiellement une première extrémité circonférentielle de la gorge annulaire (G1, G2, G3, G4, G5) et une seconde extrémité circonférentielle de la gorge annulaire, chaque gorge annulaire (G1, G2, G3, G4, G5) comprenant une entrée d'huile au niveau de sa première extrémité circonférentielle et une sortie d'huile au niveau de sa seconde extrémité circonférentielle.

2. Réducteur selon la revendication 1, dans lequel les gorges annulaires (G1, G2, G3, G4, G5) sont en communication fluidique les unes avec les autres.

3. Réducteur selon la revendication 2, dans lequel l'entrée d'huile (20) du circuit de lubrification débouche dans une gorge annulaire (G1, G2, G3, G4, G5) positionnée longitudinalement à la moitié de la longueur du pivot (14).

4. Réducteur selon l'une des revendications 1 à 3, comprenant 2k+1 gorges annulaires, k étant un nombre entier positif, de préférence supérieur ou égal à 3.

5. Réducteur selon l'une des revendications 1 à 4, dans lequel les deux gorges annulaires (G1, G5) d'extrémités longitudinales comprennent chacune une sortie d'huile reliée à un canal (26) dont une extrémité aval débouche radialement à l'extérieur de la seconde pièce annulaire (14b).

6. Turbomachine à gaz pour aéronef comprenant un réducteur (6) selon l'une des revendications précédentes dont le solaire (7) entoure et est solidaire en rotation d'un arbre du compresseur de la turbomachine.

7. Turbomachine selon la revendication précédente, dans laquelle la couronne est solidaire d'un carter ou d'une virole annulaire de stator.

## Patentansprüche

1. Mechanisches Reduktionsgetriebe für ein Gasturbotriebwerk mit Längsachse, enthaltend einen Kranz und Planetenräder (8), die mit einem Sonnenrad (7) und mit dem Kranz (9) in Eingriff stehen und jeweils frei drehbar um ihre Achse (Y) auf einem Planetenradträger (10) gelagert sind, wobei die Planetenräder (8) dazu ausgelegt sind, sich jeweils über einen Drehzapfen (14) um ihre Achse (Y) drehen, der ein erstes ringförmiges Teil (14a) mit einem axialen Schmierungsdurchlass (17) und ein zweites ringförmiges Teil (14b) umfasst, das um das erste ringförmige Teil (14a) herum angebracht ist, wobei das erste ringförmige Teil (14a) mit dem zweiten ringförmigen Teil (14b) einen Schmierungspfad begrenzt, von dem zumindest ein Öleinlass (20) im Inneren des ersten ringförmigen Teils (14a) in den axialen Durchlass (17) mündet und zumindest ein Ölauslass (28) radial außerhalb des zweiten ringförmigen Teils (14b) mündet,
wobei das erste ringförmige Teil (14a) eine Ringwand (15) umfasst, in der eine Vielzahl von Ringnuten (G1, G2, G3, G4, G5) ausgebildet ist, um die herum das zweite ringförmige Teil (14b) abdichtend angebracht ist,
wobei die Ringnuten (G1, G2, G3, G4, G5) mittels Öffnungen (19), wie Schlitzen, die in ringförmigen Trennwänden (18) zum Trennen der Ringnuten (G1, G2, G3, G4, G5) ausgebildet sind, strömungstechnisch miteinander in Verbindung stehen,
wobei jede Ringnut (G1, G2, G3, G4, G5) eine radiale Wand (22, 24) umfasst, die zwei aufeinanderfolgende Trennwände (18) verbindet, um die Ölströmung über 360° zu verhindern, wobei jede radiale Wand (22, 24) in Umfangsrichtung ein erstes Umfangsende der Ringnut (G1, G2, G3, G4, G5) und ein zweites Umfangsende der Ringnut trennt, wobei jede Ringnut (G1, G2, G3, G4, G5) an ihrem ersten Umfangsende einen Öleinlass und an ihrem zweiten Umfangsende einen Ölauslass aufweist.

2. Reduktionsgetriebe nach Anspruch 1,
wobei die Ringnuten (G1, G2, G3, G4, G5) strömungstechnisch in Verbindung miteinander stehen.

3. Reduktionsgetriebe nach Anspruch 2,
wobei der Öleinlass (20) des Schmierungspfads in eine Ringnut (G1, G2, G3, G4, G5) mündet, die in Längsrichtung auf halber Länge des Drehzapfens (14) positioniert ist.

4. Reduktionsgetriebe nach einem der Ansprüche 1 bis 3,
enthaltend 2k+1 Ringnuten, wobei k eine positive ganze Zahl, vorzugsweise größer oder gleich 3, ist.

5. Reduktionsgetriebe nach einem der Ansprüche 1 bis 4,
wobei die beiden Ringnuten (G1, G5) an den Längsenden jeweils einen Ölauslass umfassen, der mit einem Kanal (26) verbunden ist, dessen stromabwärtiges Ende radial außerhalb des zweiten ringförmigen Teils (14b) mündet.

6. Gasturbotriebwerk für ein Luftfahrzeug mit einem Reduktionsgetriebe (6) nach einem der vorhergehenden Ansprüche, dessen Sonnenrad (7) eine Welle des Verdichters des Turbotriebwerks umgibt und drehfest mit dieser verbunden ist.

7. Turbotriebwerk nach dem vorhergehenden Anspruch,
wobei der Kranz fest mit einem Statorgehäuse oder -mantelring verbunden ist.

## Claims

1. A reduction gear for a gas turbomachine with a longitudinal axis, comprising a ring gear and planet gear (8) meshing with a sun gear (7) and with the ring gear (9) each mounted free in rotation about their axis (Y) on a planet carrier (10), each of the planet gears (8) being configured to rotate about their axis (Y) through a pivot (14) which comprises a first annular part (14a) including a lubrication axial passage (17) and a second annular part (14b) mounted around the first annular part (14a), the first annular part (14a) delimiting with the second annular part (14b) a lubrication circuit at least one oil inlet (20) of which opens out inside the first annular part (14a) into the axial passage (17) and at least one oil outlet (28) of which opens radially outwards of the second annular part (14b),
wherein the first annular part (14a) comprises an annular wall (15) in which a plurality of annular grooves (G1, G2, G3, G4, G5) are formed around which the second annular part (14b) is sealingly mounted,
the annular grooves (G1, G2, G3, G4, G5) fluidly communicating by means of openings (19), such as slots, formed in annular partition walls (18) of the annular grooves (G1, G2, G3, G4, G5),
each annular groove (G1, G2, G3, G4, G5) comprising a radial wall (22, 24) joining two consecutive partition walls (18) so as to prevent oil circulation over 360°, each radial wall (22, 24) circumferentially separating a first circumferential end of the annular groove (G1, G2, G3, G4, G5) and a second circumferential end of the annular groove, each annular groove (G1, G2, G3, G4, G5) comprising an oil inlet at its first circumferential end and an oil outlet at its second circumferential end.

2. The reduction gear according to claim 1, wherein the annular grooves (G1, G2, G3, G4, G5) are in fluidic communication with each other.

3. The reduction gear according to claim 2, wherein the oil inlet (20) of the lubrication circuit opens out into an annular groove (G1, G2, G3, G4, G5) positioned longitudinally at the mid-length of the pivot (14).

4. The reduction gear according to one of claims 1 to 3, comprising 2k+1 annular grooves, k being a positive integer number, preferably greater than or equal to 3.

5. The reduction gear according to one of claims 1 to 4, wherein each of the two annular grooves (G1, G5) with longitudinal ends comprises an oil outlet connected to a channel (26) whose downstream end opens out radially outwards of the second annular part (14b).

6. A gas turbomachine for an aircraft comprising a reduction gear (6) according to one of the preceding claims whose sun gear (7) surrounds and is rotatably secured to a shaft of the compressor of the turbomachine.

7. The turbomachine according to the preceding claim, wherein the ring gear is secured to a stator annular casing or shroud.
